# EUROPEAN PATENT APPLICATION

(11) **EP 1 175 034 A2**
(43) Date of publication of application: **23.01.2002**
(21) Application number: 01202525.0
(22) Date of filing: 02.07.2001
(51) Int. Cl.: H04L 1/00

(54) **A packet data transmission system with adaptive packet size**

(30) Priority: 18.07.2000 US 618329
(71) Applicant: EASTMAN KODAK COMPANY, Rochester, New York 14650 (US)
(72) Inventor: McDermott, Bruce C., Rochester, New York 14650-2201 (US)
(74) Representative: Nunney, Ronald Frederick Adolphe

(57) **Abstract**

The present invention is a system that includes a packet generation system generating wireless image data packets having a size which is dynamically controlled responsive to a characteristic associated with the packets. The characteristic can be the number of 1's in the serial data stream, the bit error rate of the packets produced during transmission or the bit error rate trend produced during transmission. A packet size controller determines and changes a size of the packet. A packet generator collects serial image data for the packet and generates a data packet having a data field of the size determined by the controller. The packet generator supplies the packet to a wireless packet data transmission system where it is transmitted to a receiver which uses the image data.

## Description

The present invention is directed to dynamic packet size changes in a packet data transmission system and, more particularly, to a system that changes wireless image data packet sizes dynamically responsive to the number of 1's in a serial input data stream, the bit error rate of the packets produced during transmission, or the bit error rate trend produced during transmission.

In many of today's electronic imaging devices, such as digital cameras, image data is typically stored on a media such as a digital disk, tape or flash type memory card. When the user desires to transfer the images to a digital output device to produce an output suitable for viewing, such as to a hard copy printer or a computer having a display, the user must remove the media and insert it into an appropriate type media reader associated with the output device. The image data is then transferred to the output device and available for viewing.

Currently, there is a trend toward connecting digital devices together via a wireless transmission system, such as a digital radio system. These systems typically transfer data using a digital data packet protocol where the data is divided into packets of fixed size for transmission and reassembled at the receiver. It is desirable in such systems to use long packets to minimize image transmission time.

Serial data packets can contain a serial string of ones and zeros in any random order. This includes the case where the serial string is a continuous series of ones. This could occur in the pixel data generated in a digital imaging system using the full dynamic range of its' Analog to Digital converter. In saturated (highest light level) areas of the image, the pixel data will be all ones. In all other cases the pixel data will be strings of ones and zeros, or all zeros (black).

Digital radios have difficulty in transmitting certain types of data, such as the long stream of 1's, such as "1111 ... 1111" which are produced by a saturated area of an image. Typically, after a number of 1's the radio will experience drop-outs ("0's"). This results in errors in the reassembled data requiring correction or retransmission of the data.

Digital radios, when transmitting these digital data typically use cyclic redundancy codes (CRC) to detect errors, and once detected, re-transmit the data. Encoding methods such as Reed-Solomon or Hamming encoding may also be used. These methods work, however, they take additional time to send the data. When transmitting long strings of 1's using such an encoding scheme, digital radios experience a higher bit error rate. A higher bit error rate is also experienced in areas where radio interference is high.

What is needed is a wireless packet data transmission system that transmits (image) data in dynamically variable sized packets to reduce errors in transmission and simultaneously maximize the data through put rate.

What is also needed is a wireless system that will dynamically adjust the size of the packets responsive to the number of 1's being transmitted.

What is also needed is a wireless system that will dynamically adjust packet size responsive to error rate or error rate trend to maximize data transmission bandwidth and data integrity.

It is an object of the present invention to improve the efficiency of the transmission of (image) data packets, particularly when transmitted via a wireless radio system.

It is also an object of the present invention to dynamically control a size of wireless (image) data packets responsive to a number of sequential 1's in the input data stream.

It is another object of the present invention to dynamically control the size of wireless (image) data packets responsive to a received bit error rate of the packets.

It is an additional object of the present invention to dynamically control the size of wireless (image) data packets responsive to a received bit error rate trend of the packets.

It is an object of the present invention to provide a system in which one of a set of packet size thresholds can be set as a specific, fixed constant related to radio hardware (modulator) performance.

The above objects can be attained by a packet generation system generating wireless image data packets having a size where the size is dynamically controlled responsive to a characteristic associated with the packets. This characteristic can be the number of 1's in the serial data stream, the bit error rate of the packets produced during transmission, or the bit error rate trend produced during transmission.

These, together with other objects and advantages which will be subsequently apparent, reside in the details of construction and operation as more fully hereinafter described and claimed, reference being had to the accompanying drawings forming a part hereof wherein like numerals refer to like parts throughout.
Fig. 1 illustrates a wireless data packet produced in accordance with the present invention including features associated with IEEE standard 802.11;
Fig. 2 depicts a first embodiment of the invention in which packet size is dynamically changed responsive to a quantity of ones in sequence, in a serial (image) data stream;
Fig. 3 is a flowchart of the operations performed in a software (firmware) version of the first embodiment;
Fig. 4 illustrates a packet size controller in more detail;
Figs. 5A and 5B depict a second embodiment of the invention in which packet size is dynamically changed responsive to received bit error rate or received bit error rate trend and illustrate a typical radio link using packet size control based on received bit error rate or received bit error rate trend (or both can be used simultaneously);
Fig. 6 illustrates the packet size controller, where the packet size is determined by the bit error rate and where this structure can be implemented in hardware, firmware or software;
Fig. 7 illustrates an alternate way of implementing the packet size controller, (where the packet size is determined by the bit error rate) utilizing a look up table; and
Fig. 8 illustrates the packet size controller, where the packet size is determined by the bit error rate trend, or rate of change of the bit error rate and where this structure can be implemented in hardware, firmware or software.

The present invention is designed for situations where a radio cannot send a packet of over a certain number of 1's, such as 2000, without the radio modulator saturating and causing drop-outs to 0's. This condition can occur in a digital, CCD, imaging system when the imager is caused to saturate (CCD blooming) and the imaging system uses the full dynamic range of the A/D conversion stage. If the camera is pointed at the sun, the code equivalent pixel values will be all 1's for the spatial duration of the image of the sun. It could easily be more that 2000 pixels. This condition might also exist if a user wanted to photograph a couple standing in a park, with the sun setting over their shoulder, or a street scene, at night with street lights.

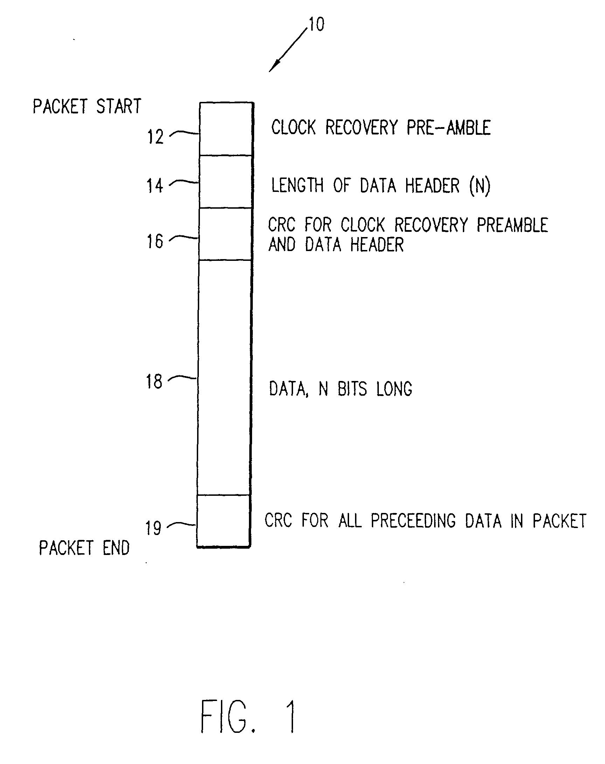

The present invention, which can be implemented in hardware firmware (programmable logic), or software, preferably operates with serial data packets as defined in the ISO/IEC 8802-11 (ANSI/IEEE Std. 802.11) International standard for Telecommunications and Information Exchange between systems, first edition 1999-08-20, depicted in Fig. 1. A packet **10** includes a clock recovery preamble field **12** which can be used to recover the data clock at the receiver, so the data in the packet can be synchronously registered. A header field **14** defines the length of the data in the data field of the packet. A check field **16** is the Cyclic Redundancy Check (CRC) data used for error checking the clock recovery preamble and header data. The field **16** is followed by a data field **18** which includes the (image) data being transmitted. A final CRC field **19** is used for error checking the preceding data of the packet (preamble CRC, header, CRC and data).

A first embodiment of the present invention is a system that transmits image data or any type of data in packets by RF carrier where packet size is adjusted responsive to the number of 1's being transmitted. In actual practice, the data field size is determined based on the data in the data stream, and then the data is written into the data field of the packet, which thereby changes the packet size. The packet size (or data field size) is reduced when the number of 1's is increasing and packet size is increased when the number of 1's is falling. Thresholds are used to effect the changes in packet size. The thresholds for increasing and decreasing the packet size are made different to prevent oscillation. More particularly, digital radios struggle transmitting a continuous stream of "1" values. After a certain quantity of continuous 1's the radio will have drop-outs (0's). Typically, the data is broken into (fixed) packets of a predetermined size to guarantee reliable operation. This invention uses data pipeline techniques to analyze (image) data being transmitted using digital packets. The packet size is dynamically changed based on the continuous quantity of 1's in the data being transmitted. After a predetermined quantity of 1's has been detected in the serial data stream, the packet size is made smaller to preserve the image quality (decreasing the effective data rate). As the quantity of continuous 1's in the data stream decrease, the packet size is increased to increase the effective data rate, while maintaining good quality. The packet size decrease (1 quantity) threshold and the packet size increase (1 quantity) threshold are different quantities. This provides a hystersis that prevents oscillation.

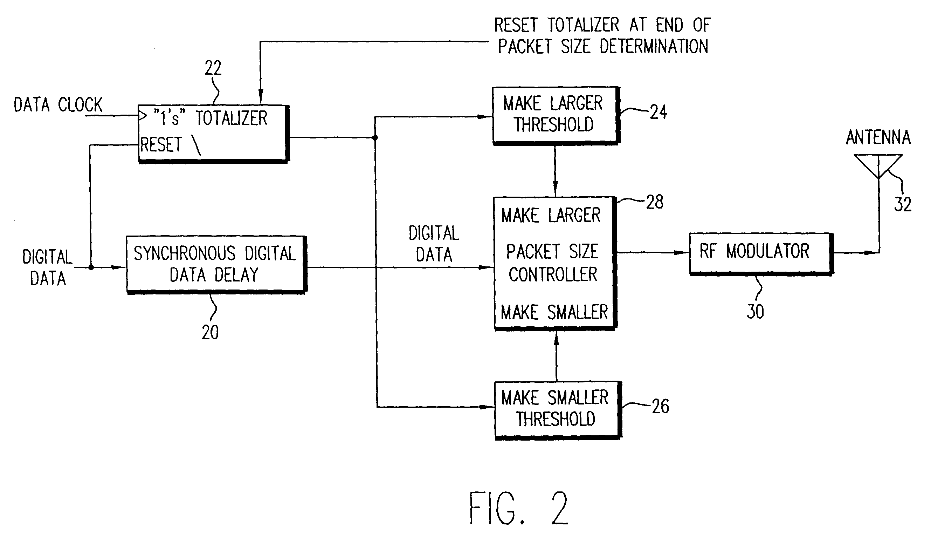

As depicted in Fig. 2, incoming digital packet data, which is to be formed into a packet, is supplied to a synchronous digital data delay unit **20** which can be a FIFO (First-In-First-Out) shift register which delays the incoming data for a period of time sufficient to count the continuous quantity of 1's that will cause a drop out to occur. For example, if the continuous quantity of 1's that can be sent through the RF modulator without a dropout is 2000, then the synchronous digital data delay must be 2000 bits long plus any digital delays incurred due to the threshold detection. This delay unit allows the packet size of a packet that is about to be transmitted to be changed. A 1's totalizer unit **22** totals the number of continuous 1's in the data stream until reset. An up counter which is reset by each 0 in the incoming digital data can be used as the totalizer.

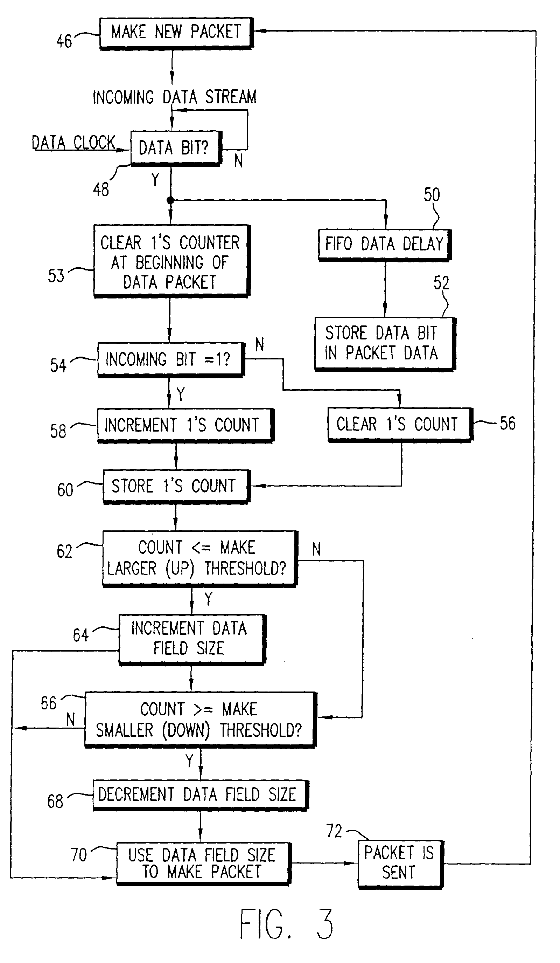

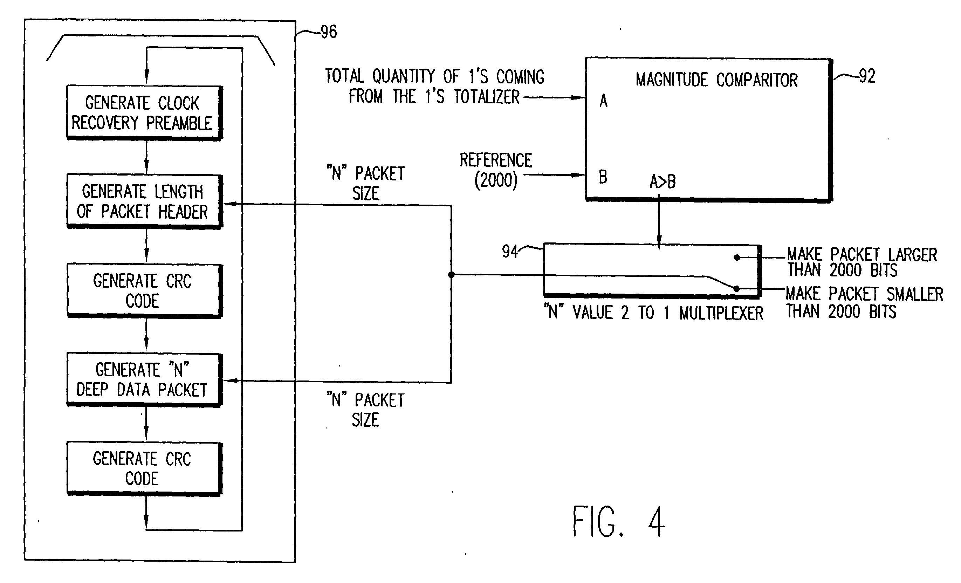

The count from the totalizer **22** is supplied to threshold comparison units **24** and **26** which each hold different thresholds for making the packet size larger or smaller. These units **24** and **26** also compare the respective thresholds to the count from the totalizer **22** and produce corresponding size change signals indicating that the packets size should change. Each of the units **24** and **26** can be comprised of a magnitude comparator comparing totalizer count to the corresponding threshold. This is illustrated in Figs. 3 and 4. (Note, the "make smaller threshold" **26** is the continuous quantity of ones, in the serial data stream, that will cause the RF modulator to generate drop outs. In the example described later herein, the number used is 2000. In a practical sense, it would be wise to set the threshold slightly lower than the exact threshold (i.e. 1900 instead of 2000)).

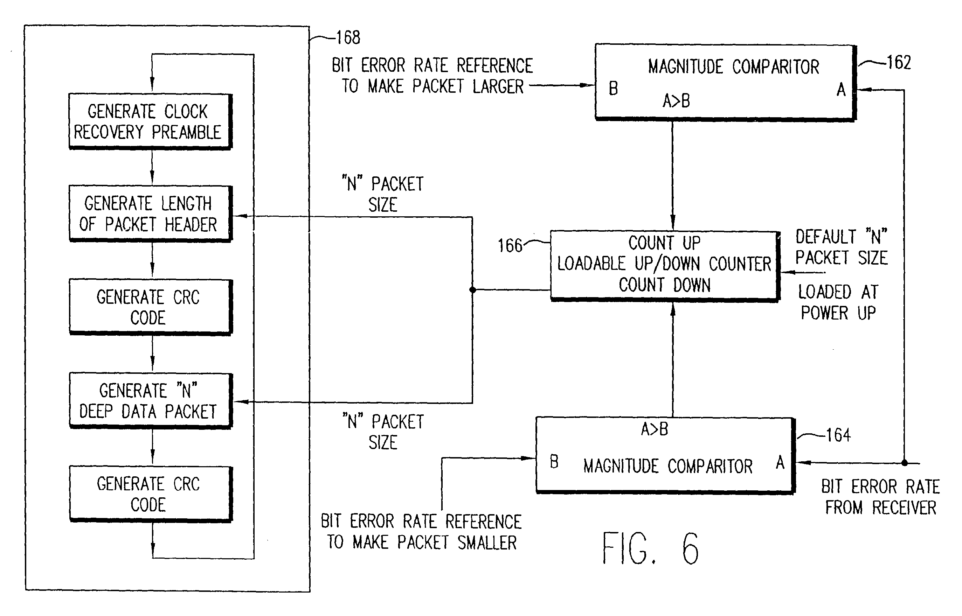

The signals indicating a change in the size of the (data field of the) packet is supplied to a packet size controller **28** (see Figs. 4 and 6) which changes the size of the data field of the packets responsive to the size change signals. The controller **28** (see Fig. 6) includes an up/down counter that stores the size (N) of the data field of the packet and a conventional packetizing or packet generating unit that creates a packet in accordance with the IEEE standard previously mentioned. In a practical execution or implementation, there needs to be an upper limit to the size of the packet generated (which can be provided by one of skill in the art), with a stream of ones and zeros, ( as opposed to continuous 1's), otherwise this invention could lead to an infinitely long packet that never gets sent.

The controller **28** (see Fig. 4, 6, 7 or 8), alternately, can be implemented using a fixed threshold (2000) and two fixed packet sizes. One packet size being significantly greater than 2000 and one packet size being slightly smaller that 2000. A conventional packetizing or packet generating unit is used and it creates a packet in accordance with the IEEE standard previously mentioned. This embodiment may oscillate when the quantity of 1's bounces around 2000 but is simple to implement and may be acceptable in some applications.

The packets created by the controller **28** are supplied to an RF modulator **30** and transmitted via an antenna to a receiver which reassembles the digital image data transmitted.

As previously mentioned, the first embodiment can be implemented as a software (firmware) program running in a digital processor/computer. The operations performed by the software version are depicted in Fig. 3. The system also includes storage in the digital processor, such as permanent or removable magnetic and optical discs, RAM, ROM, etc. on which the process of the present invention can be stored and distributed. The processes can also be distributed via, for example, downloading over a network such as the Internet.

The system often starts after initialization with a jump into making **46** a new packet. When a new data bit in the serial bit stream is detected **48**, such as by sampling the incoming data at a specified clock rate (typically data is synchronous with a data clock in a digital processor), a FIFO data delay **50** occurs and is followed by the storage **52** of the bit in the data field **18** of the packet. The number of bits stored in the packet data field is updated as described herein. The incoming data bit is stored in the data field **18** of the packet at a location determined by the respective serial position of the bit in the incoming data stream as conventionally described in, for example, IEEE 802.11. The software FIFO is used to delay the serial data quantity of data cycles necessary to allow determination of data field size for the current packet being created.

If the data packet is a new packet, the 1's counter is set/reset **53** to zero. Essentially, in parallel, the incoming bit is examined **54** to determine if it is a 1. If not, the total count of 1's is set **56** to zero. If the bit is a 1, the count of 1's is incremented **58** and stored **60**.

The total 1's count is compared **62** to the up threshold which is used to indicate that the packet is to be increased. If the 1's count is less than or equal to this value, the current size (N) of the data field is increased **64** by a predetermined amount, such as 1. Of course, this predetermined amount can be greater than 1. If the 1's count is greater than the up threshold, it is compared **66** to the down threshold. If the consecutive 1's count is greater that or equal to the down threshold, the field size is decreased **68** by a predetermined amount, such as 1. Of course, this predetermined amount can be greater than 1. In the case where the consecutive 1's count is not less than or equal to the up threshold, or not greater than or equal to the down threshold, the packet data field size remains the same. This forms a "dead zone" or hysteresis where this hysteresis prevents oscillation around the thresholds.

The number of bits that have been stored in the data field count is then compared **70** to the current size (N) of the data field. If the number of bits that have been loaded into the packet is equal to the current field size, a packet is created and transmitted **66**. If the number of bits that have been loaded into the packet is not equal to the current packet data field size, the packet continues to be built. Next, the system awaits **48** another data bit.

The first embodiment can be implemented in a version that makes the data field size a small predetermined value, such as 1500, which will not cause drop-outs when the number of 1's counted reaches a predetermined value, such as 2000, or a large predetermined value, such as 4000 when the 1's count does not reach the predetermined value. In this version, as illustrated in Fig. 4, a magnitude comparator **92** is used to decide if the quantity of 1's (from the 1's totalizer 22) in the serial data stream is greater than 2000. If the quantity of 1's is greater than 2000, a digital multiplexer **94** switches to send an "N" smaller than 2000 (1500) to the packet generator **96** producing packets in the preferred IEEE format. If the result from the 1's totalizer **22** is not greater than 2000, then the digital multiplexer **94** is switched to send a large "N" (4000).

The second version of the first embodiment can also be implemented in software (firmware) by making changes to the flow of operations shown in Fig. 3, which changes are within the capabilities of those of skill in the art.

The above discussion addresses the changing of the data field of the digital packet (see Fig. 1). It is understood that the RF modulator in the radio transmitter is sensitive to a continuous string of ones, it does not care about data format. Therefor, the actual "N" data field thresholds chosen have to account for the additional data bits contained in the overall packet. Specifically, we need to account for the quantity of bits necessary for the clock recovery preamble, length of data header, CRC for clock recovery header and Data Header, and CRC for all preceding data in packet. (There is the rare probability that all of these bits could be 1's). Therefor, the values of "N" need to be adjusted accordingly which can be done by a person of ordinary skill in the art who has reviewed this disclosure.

A second embodiment of the invention is a system that transmits image data or any other type of data in packets by RF carrier where the packet size is adjusted responsive to bit error rate. (Bit error rate provides explicit information about the current radio transmission conditions.) The packet size is reduced when the error rate is increasing, and packet size is increased when the error rate is falling or improving. Error rate thresholds are used to effect the changes in packet size. The thresholds for increasing and decreasing the packet size are made different to prevent oscillation. This invention utilizes a digital packet data transceiver with bit error rate detection at the receive end of the radio set. Typically Cyclic Redundancy Code (CRC) encoding is done at the transmit side of the radio to enable bit error rate detection (correction) at the receive side of the radio as illustrated in IEEE 802.11 and as in packet **10** of Fig. 1. This approach uses a bit error rate trend detector and/or bit error rate detector at the receiver side. (Bit error rate trend information provides rate of change (slope) of bit error rate information. Bit error rate trend information allows adjustment of the radio before data transmission is compromised by providing a predictor that things are getting worse (or better). Error rate and/or error rate trend information is transmitted from the receive end of the radio back to the transmitter. As the bit error rate and/or bit error rate trend gets worse, a predetermined threshold is reached, the transmitter then decreases the size of the packets to reduce the bit error rate. As the bit error rate and/or bit error rate trend improves past a predetermined threshold, the packet size is increased to increase the data through put. This is done using the same method. The bit error rate trend detector transmits its data from the receiver back to the transmitter. The packet size decrease (bit error rate) threshold and the packet size increase (bit error rate) threshold are different quantities. This provides a hystersis that prevents oscillation. Of course the packet size can change based on the bit error rate and bit error rate trend.

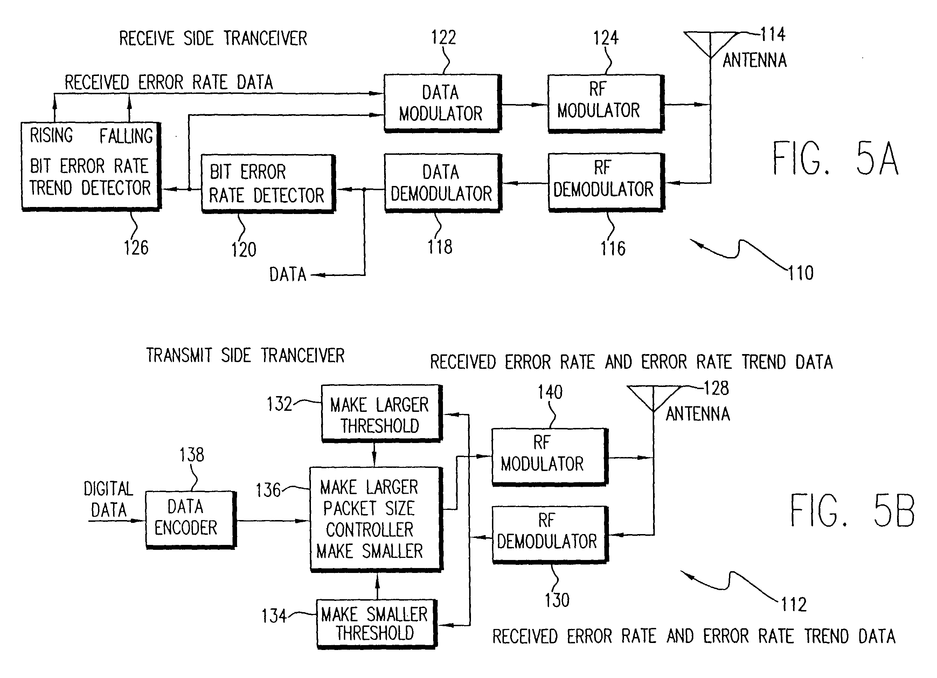

In a first hardware version of the second embodiment feedback of a bit error rate is provided from a receiver unit **110** to a transmitter unit **112** as shown in Figs. 5A and 5B. The receiver unit **110** receives data via an antenna **114** which is demodulated by demodulators **116** and **118**. A bit error rate of the data is determined using the desired decoding error detection scheme by a bit error rate detector **120**. The bit error rate is returned to the transmitter via modulators **122** and **124** and antenna **114**.

In a second version the bit error rate is supplied to a bit error rate trend detector **126** and the trend (slope magnitude and sign) is sent back to the transmitter. The bit error rate trend detector **126**, which could be implemented as a fixed program microprocessor or programmable gate array, calculates and reports a slope (sign) and a magnitude by comparing the current bit error rate with a previously stored bit error rate. The time between the two bit error rates, stored and compared, is determined by the desired response time of the feedback loop.

In the transmit unit **112** (Fig. 5B) the demodulated bit error rate and/or bit error rate trend is supplied via an antenna **128** and a demodulator **130** to threshold units **132** and **134** which indicate a change in size for the data packets to a packet size controller **136**. The controller **136** receives encoded data from encoder **138**, generates a packet, and transmits it to the receiver via modulator **140** and antenna **128.**
The controller **136** (**28**) can be configured in a number of different ways as previously mentioned as well as in the manner shown in Figs. 6 - 8.

As shown in Fig. 6, the bit error rate is supplied to comparators **162** and **164**. A comparison is made with corresponding small and large threshold references for packet size change reference values. These comparators control the up and down counting of a counter **166** which is initially loaded with a predetermined default packet or data field size value N, which is smaller that the total quantity of 1's that could cause the modulator to generate dropouts. In this way the first packet generated, if it is all 1's, will not cause dropouts. The counter **166** supplies the data field size value N to a packet generator **168**.

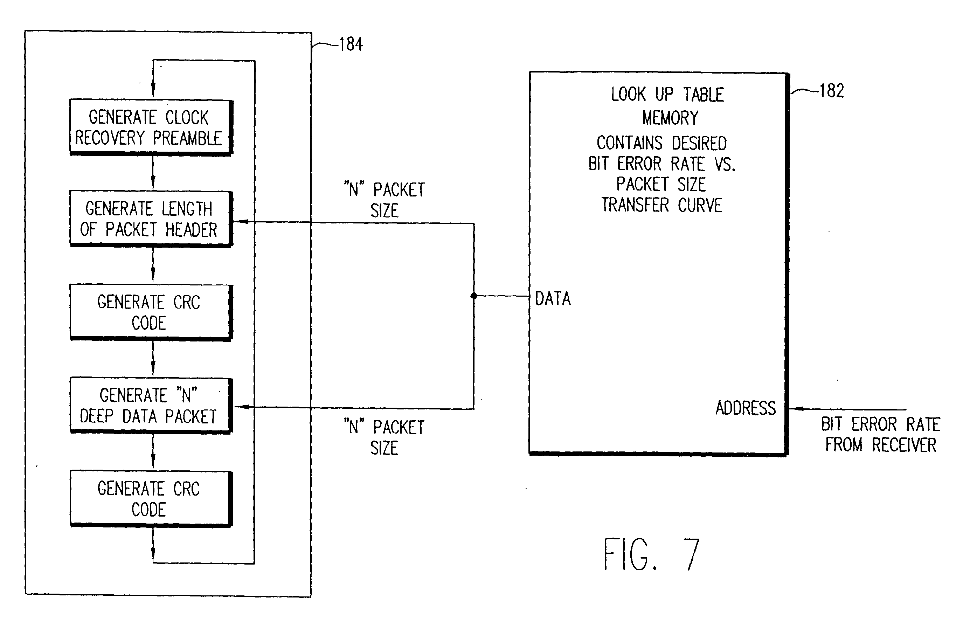

In the controller version shown in Fig. 7, a look-up table **182**, which contains a packet size value entry for each bit error rate, supplies the packet size to a generator **184** responsive to the received bit error rate. A look up table can be implemented using a digital memory. The bit error rate is connected or supplied to the memory address lines. The memory locations contain the desired packet size "N" output information for each bit error rate.

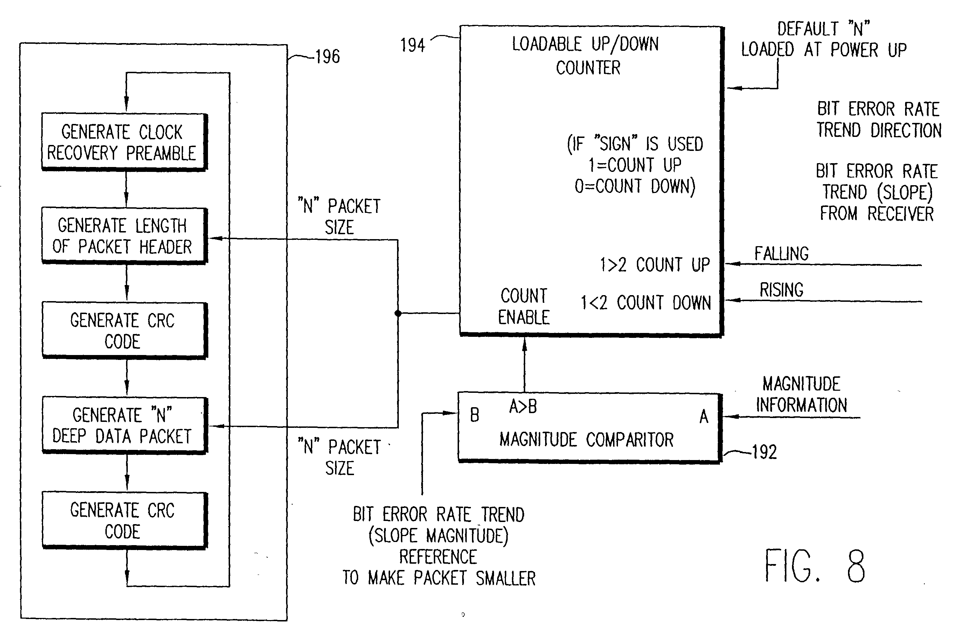

The controller version depicted in Fig. 8 compares the magnitude of the bit error rate trend from trend detector **126** to a magnitude reference supplied to comparator **192** to determine whether the packet size should be changed. A change indicator is supplied by comparator **192** to enable up/down counter **194**. The slope (sign) from detector **126** causes the counter **194** to count up or down, respectively, from an initial packet size value loaded at power up. The packet size produced by counter **194** is supplied to generator **196** where packets responsive to the size "N" are generated. In this version, a magnitude comparison of bit error rate 1 and 2 is performed and there are three possible results; 1>2, 1<2 and 1=2. This is the bit error rate trend direction information. 1>2 indicates that the bit error rate is improving, positive slope. 1<2 indicates that the bit error rate is getting worse, negative slope. 1=2 indicates that the bit error rate is the same, so the trend or slope is 0. A slope can be calculated by subtracting bit error rate 1 from bit error rate 2. (Given a fixed and consistent sample time between measurements, slope or rise/run, the "run" is a constant). The bit error rate trend (direction) can be encoded as a sign value associated with the slope; 1=better, 0=worse. The magnitude comparator, as previously mentioned, is used to decide when to increment or decrement the up/down counter. The bit error rate trend direction information is used to decide which direction the counter should count. Small variations in the bit error rate trend can be expected. Large variations in the bit error rate trend mean that the packet size should be adjusted. This is accommodated by choosing the appropriate bit error rate trend magnitude reference to supply to the magnitude comparator. The bit error rate trend determination can be performed at the receiver or the transmitter. More data points can also be stored to establish a longer history for the trend.

The various versions of the second embodiment can also be produced as software (firmware) by those of ordinary skill in the art from the above descriptions.

The present invention has been described with respect to various preferred embodiments where the features have been discussed separately. It is of course possible to combine the features in a number of different ways which will be apparent to those of ordinary skill in the art and which are considered to be part of this disclosure

## Claims

1. A system, comprising:
a packet generator generating data packets having a size; and
a packet size controller dynamically controlling the packet size responsive to input data characteristics, a bit error rate and a bit error rate trend, said controller comprising:
a counting unit counting data having a value of 1 in an incoming serial data stream producing a 1's count and resetting when data having a value of 0 is supplied to said counting unit;
a threshold comparison unit comparing the 1's count to high and low packet size 1's change thresholds of the bit error rate and the bit error rate trend and producing a packet size change indicator; and
a packet size storage unit storing the packet size and changing the packet size responsive to the indicator, the bit error rate and the bit error rate trend, where said system changes packet size between two reference values responsive to the indicator.
